# EUROPÄISCHE PATENTSCHRIFT

(11) **EP 1 949 994 B1**
(45) Veröffentlichungstag und Bekanntmachung des Hinweises auf die Patenterteilung: **09.04.2014**
(21) Anmeldenummer: 07001799.1
(22) Anmeldetag: 27.01.2007
(51) Int. Cl.: B23D 45/20

(54) **Vorrichtung und Verfahren zum Trennen und Aufteilen eines plattenförmigen Produktes**
Device and method for separating and segmenting a plate-shaped product
Dispositif et procédé destinés à la séparation et à la répartition d'un produit en forme de plaque

(43) Veröffentlichungstag der Anmeldung: 30.07.2008
(73) Patentinhaber: Dieffenbacher Maschinenfabrik GmbH, 75059 Zaisenhausen (DE)
(72) Erfinder: Salenz,Dieter, 75059 Zaisenhausen (DE); Jung, Herbert, 76698 Ubstadt-Weiher 4 (DE)
(74) Vertreter: Hartdegen, Anton

(56) Entgegenhaltungen:
- EP-A1- 0 538 513
- DE-A1- 3 434 671
- DE-C1- 19 837 132

## Beschreibung

Die vorliegende Erfindung betrifft eine Vorrichtung zum Trennen und Aufteilen eines plattenförmigen Produktes nach dem Oberbegriff des Anspruches 1 sowie ein Verfahren nach dem Oberbegriff des Anspruchs 10. Eine solche Vorrichtung und ein solches Verfahren sind der DE 198 37 132 C1.

Mit DE 198 37 132 C1, DE 198 38 964 C2 und DE 100 02 802 A1 sind so genannte Einzelsägen in diagonaler Arbeitsweise bekannt geworden.
DE 198 37 132 C1 offenbart dabei eine Trennvorrichtung zum Quertrennen von durchlaufenden Plattensträngen. Dabei ist hervorzuheben, dass zwei Kreissägen auf einem umlaufenden Antriebsriemen an einem Führungsbalken derart angeordnet sind, dass eine Kreissäge in Start-, die andere in Endposition steht. Dementsprechend werden die Kreissägen immer gegensätzlich zueinander verfahren. Diese Vorrichtung hat sich nur für lange Taktzeiten bzw. langsamen Plattenstrangvorschub bewährt. Weiterhin ist Nachteilig, dass bei Ausfall des Zahnriemenantriebes oder einer Kreissäge die gesamte Trennvorrichtung außer Betrieb genommen werden muss und die vollständige Produktion still steht, da keine Trennung mehr vorgenommen werden kann.
Mit der DE 198 38 964 C2 ist eine Diagonalsäge in einfacher Ausführungsart bekannt geworden, die eine Verschwenkvorrichtung für den über dem Plattenstrang angeordneten Führungsbalken aufweist. Die DE 100 02 802 A1 zeigt eine einfache Diagonalsäge, die parallel zu einer Einzelsäge noch eine weitere Säge angeordnet ist, die aber nur Anwendung findet, wenn ein Laborschnitt angefertigt werden soll. Dabei wird Material für eine Qualitätsbeurteilung aus der laufenden Produktion abgeschieden.
Mit WO 97 / 42 012 A1 ist ein Verfahren zum Formatschneiden bekannt geworden. Voraussetzung für dieses Verfahren ist die vorherige Längsaufteilung des Hauptplattenstranges. Die hier verwendeten Diagonalsägen, die jeweils einen Teilstrang durchtrennen und unabhängig von einander arbeiten, gehören zur Gattung der Doppeldiagonalsägen mit zwei oder mehreren zueinander parallel angeordneten Diagonalsägen in einem Gestell und werden im Wechseltaktbetrieb betrieben.

Mit derartigen Diagonalsägen werden insbesondere Produkte gesägt, die als endloser Plattestrang aus einer Produktionsanlage kommen. Bevorzugt besteht eine derartige Produktionsanlage aus einer kontinuierlich arbeitenden Doppelbandpresse oder einer Kalanderpresse. Die auf solchen Pressen hergestellten Produkte sind zum Beispiel Spanplatten, MDF-Platten, OSB-Platten, Kunststoffplatten, Hochdruck-Schichtstoffplatten und Gipskarton oder Gipsfaserplatten oder dergleichen. Andererseits ist auch eine denkbare Besäumungsstrecke für Taktpressen denkbar, die sofort nach Austritt aus dem Entladekorb die Platten während ihres kontinuierlichen Transportes in Richtung Abstapelung quer zur Transportrichtung ablängen bzw. besäumen. Diese Sägevorrichtungen werden mittlerweile digital angesteuert, um einen millimetergenauen Gleichlauf zwischen Vorschubbewegung der Säge und Vorschubbewegung des Produktes zu gewährleisten. In üblicher Anwendung werden Einzelsägen für den Zuschnitt von langen Platten, bzw. bei langsamen Vorschubgeschwindigkeiten verwendet. Mehrfachdiagonalsägen finden bei einer notwendigen Verkürzung der Taktzeit für kurze Platten oder hohe Vorschubgeschwindigkeit Verwendung, wobei die Sägen abwechselnd zur Anwendung kommen.

Mit EP 1 584 433 A1 ist eine Mehrfachdiagonalsäge zum Sägen von plattenförmigen Produkten, bestehend aus einem Gestell mit drei eng nebeneinander angeordneten Sägeschlitten bekannt geworden, wobei je Sägeschlitten eine Säge angeordnet ist.

Im Rahmen der fortschreitenden technologischen Entwicklung im Bereich der Werkstoffplattenherstellung zeigt sich, dass sich ein Trend zur Produktionsanlagen entwickelt hat, die eine Vielzahl an Werkstoffplattendicken herstellen müssen. Das Spektrum reicht dabei von 1 mm bis zu 60 mm und mehr Enddicke der Produkte. Natürlich hat die fortschreitende Entwicklung der Bindemittel und der Aufbereitung der Späne/Fasern diesen Vorgang noch beschleunigt. Dabei ist die jeweilige Vorschubgeschwindigkeit der Produktionsanlage meist abhängig von der herzustellenden Dicke, Dichte und Länge der Werkstoffplatte. Verallgemeinert lässt sich die Aussage aufstellen, dass bei der Herstellung dicker Platten ein langsamer Vorschub von etwa 50 bis 500 mm pro Sekunde notwendig ist, während dünne Platten einen Vorschub von bis zu 2000 mm pro Sekunde und mehr benötigen. Dies ist natürlich auch von der jeweiligen verwendeten Produktionsanlage abhängig, da bei kontinuierlich arbeitenden Pressen beispielsweise eine dicke Platte einen hohen Wärme- und Druckeintrag zur Aushärtung benötigt und dementsprechend langsam durch die kontinuierlich arbeitende Presse laufen muss, wohingegen eine dünne Platte schnell durch die Presse hindurch gefahren wird.

Mittlerweile hat sich der weltweite Markt für Produktionsanlagen in so weit geändert, dass Neuanlagen zwar benötigt werden, aber auch Altanlagen zur Instandhaltung, Modernisierung und Erweiterung umgebaut werden, um den heutigen Ansprüchen zu genügen. Dabei ist dem Fachmann bekannt, dass nach einer kontinuierlich arbeitenden Presse die Aufteilvorrichtung, bestehend aus Diagonalsägen, und weiter eine Klimatisierungsvorrichtung, bestehend aus einem Sternwender und/oder eine Aufteilstation mit Abstapelvorrichtung angeordnet ist. Grundsätzlich wird immer auf eine möglichst kompakte Anordnung der Anlagenteile Wert gelegt, um nicht unnötig lange Fördervorrichtungen vorsehen zu müssen. Gleichzeitig soll umbauter Raum eingespart werden.

Wird nun eine bestehende Produktionsanlage von einer maximalen Produktionsgeschwindigkeit von bis etwa 1200 mm pro Sekunde umgerüstet auf bis zu 2000 mm pro Sekunde, entsteht das Problem, dass direkt nach einer kontinuierlich arbeitenden Presse die Taktzeiten der bestehenden Diagonalsägen nicht mehr ausreichen, um den mit der fast doppelten Geschwindigkeit austretenden Plattenstrang ordnungsgemäß in das für die weitere Produktion notwendige Plattenmaß zu zerteilen.

Bei den bekannten Vorrichtungen zum Sägen von plattenförmigen Produkten gemäß eingangs genannter Art besteht der gravierende Nachteil darin, dass jeweils zur Verkürzung der Taktzeit und/oder zur Erhöhung der Betriebssicherheit je nach Bedarf mehrere Einzeldiagonalsägen hintereinander aufgestellt werden. Dies bedeutet neben einem erhöhten Platzbedarf in Transportrichtung des Produktes auch vermehrte Anlagenkosten. Denn jede Diagonalsäge benötigt neben einer eigenen Steuerungs- und Regeleinheit eine Absaugvorrichtung, eine eigene Stromversorgung, ein eigenes Gestell und natürlich auch eine eigene Anbindung an die Zentralsteuerung der Gesamtanlage.
Zusätzlich zum Raumproblem müssen die Anforderungen an moderne Produktionsanlagen weiterhin erfüllt werden, zum Beispiel dass:
- die Sägeaggregate in eine gesicherte Werkzeugposition gefahren werden können, in der ein Sägeblattwechsel gefahrlos für einen Monteur durchgeführt werden kann,
- ein Sägeblattwechsel während der laufenden Produktion durchgeführt werden kann,
- kurze Platten bei hoher Taktzahl zugeschnitten werden können,
- zusätzlich zur laufenden Produktion Laborschnitte mit etwa 10% der vorgegebenen Regelplattenlänge zur Qualitätsprüfung angefertigt werden können und
- eine ausreichende Redundanz der Sägen bei Ausfall einer oder sogar zweier Sägen mit genügend Schneidkapazitäten für die laufende Produktion zur Verfügung steht.

Die Aufgabe der vorliegenden Erfindung besteht darin, eine Vorrichtung zum Sägen plattenförmiger Produkte der eingangs genannten Art zu schaffen, bei der gemäß den heutigen Anforderungen einer hohen Produktionsgeschwindigkeit hohe Taktzahlen bei Trennung eines kontinuierlich bewegten Plattenstranges möglich sind und dies einhergehend mit einem geringen Bauraum verwirklicht werden kann. Gleichzeitig soll die genannte Vorrichtung bei einer Aufrüstung von Altanlagen für die Herstellung von Werkstoffplatten bei geringem vorhandenem Bauraum installiert werden können. Zusätzlich soll sich bei gleich bleibendem oder verringertem Bauraum eine höhere Sicherheit gegen Ausfall der Gesamtvorrichtung ergeben.

Die Lösung dieser Aufgabe besteht in einer Vorrichtung zum Sägen von plattenförmigen Produkten mit den Merkmalen des Patentanspruchs 1 und in einem Verfahren mit den Merkmalen der Patentanspruchs 10.

Die Vorteile vorliegender Anordnung sind neben dem geringen angestrebten Bauraum auch die Verringerung an notwendigen Anlagenteilen für weitere Diagonalsägen. Zum Beispiel fahren die auf einer Sägespur angeordneten Diagonalsägen im gleichen Bereich, so dass neben nur einem notwendigen Gestell auch nur eine Absaug- oder Auffanganlage für die Späne notwendig ist. Auch erleichtert sich die Einstellung und Programmierung der Gesamtanlage, da die Trennschnitte in einer einheitlichen Spur durchgeführt werden und entsprechende Rechnungsalgorithmen für die Steuerung zur Anpassung an unterschiedliche Gestelle mit den entsprechenden Abständen der Schnittlinien zueinander vereinfacht oder nicht notwendig sind. Mit jeder Vereinfachung erhöht sich gleichermaßen auch die Betriebssicherheit einer Gesamtanlage und deren Effizienz. Dabei ist es möglich die Sägeschlitten oberhalb und/oder unterhalb des zu trennenden Plattenstranges anzuordnen.

Vorteilhafte und zweckmäßige Ausgestaltungen des Gegenstandes der Erfindung gehen aus den Unteransprüchen und der folgenden Beschreibung anhand der Zeichnung hervor.

### Es zeigen:

- Figur 1: in einer Draufsicht die über einem zu sägenden Plattenstrang angeordnete Vorrichtung mit einer Laufschiene und daran angeordneten Sägeschlitten in einseitiger Bauweise,
- Figur 2: die über einem zu sägenden Plattenstrang mehrfach hintereinander angeordnete Vorrichtung in einseitiger Bauweise,
- Figur 3: die Vorrichtung in Vorderansicht mit einer Laufschiene und daran zwei angeordneten Sägeschlitten über einem Plattenstrang,
- Figur 4: die Vorrichtung in Vorderansicht mit einer Laufschiene und daran zwei angeordneten Sägeschlitten unter einem Plattenstrang,
- Figur 5: die über einem zu sägenden Plattenstrang angeordnete Vorrichtung mit einer Laufschiene und daran angeordneten Sägeschlitten in zweiseitiger Bauweise,
- Figur 6: die Vorrichtung nach Figur 5 in einer Seitenansicht mit beidseitig an der Laufschiene angeordneten Sägeschlitten.

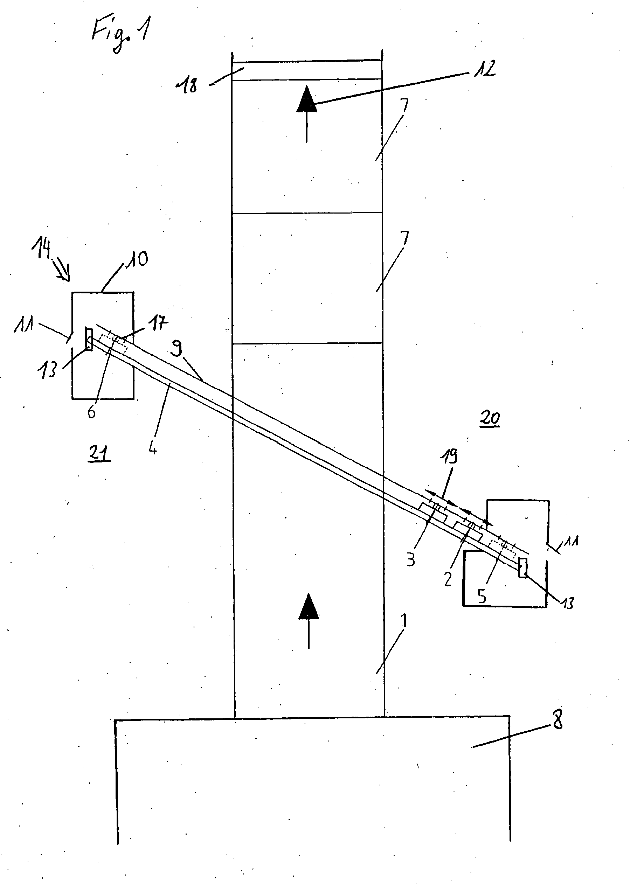

In Figur 1 findet sich in einer Draufsicht die über einem zu Platten 7 zu zerteilenden Plattenstrang 1 angeordnete Vorrichtung mit zwei hintereinander angeordneten Sägeschlitten 2, 3 auf einer Laufschiene 4 in einseitiger Bauweise, wobei die Vorschubrichtung 12 des aus der Produktionsanlage 8 austretenden Plattenstranges 1 vertikal verläuft. Auf jedem Sägeschlitten 2, 3 ist ein heb- und senkbares Trennaggregat 17 angeordnet. Das Trennaggregat 17 kann aus einer Kreissäge, aber auch aus anderen geeigneten Vorrichtungen zur Trennung eines Plattenstranges 1 bestehen. Die Trennaggregate 17 können mittels geeigneter Verfahrantriebe 23, 24 in Verfahrrichtung 19 auf der Laufschiene 4 von der Startseite 20 zur Endseite 21 und zurück verfahren werden und schneiden bevorzugt entlang einer Trennlinie 9. Dabei können die Sägeschlitten 2, 3 durch von außen wirkenden Verfahrantrieben 23 wie Linearantriebssysteme (Riemenantrieb, Kugelumlaufantrieb oder dgl.) angetrieben werden oder die Sägeschlitten 2, 3 weisen eigene Antriebe auf. Entscheidend nach der Lehre ist, dass auf einer Seite einer Laufschiene 4 zumindest zwei Sägeschlitten 2, 3 zur Anwendung kommen, die mit einem zeitlichen Abstand nacheinander Trennschnitte von der Startseite 20 in Richtung Endseite 21 durch den Plattenstrang 1 durchführen, aber zusammen wieder von der Endseite 21 in Richtung Startseite 20 verfahren.
Der Sägeschlitten 2 kann in eine Werkzeugposition 5 auf der Startseite 20 verfahren werden bzw. der Sägeschlitten 3 in eine Werkzeugposition 6 auf der Endseite 21. In diesem Sicherheitsbereich kann ein Sägeblattwechsel oder eine Reparatur durch Wartungspersonal gefahrlos durchgeführt werden, da dieser Sicherheitsbereich durch Sicherheitszäune 10 am Gestell 13 abgesichert und nur durch Türen 11 zugänglich ist. Durch die beidseitige Anordnung der Werkzeugwechselpositionen 5, 6 ist jeweils sichergestellt, dass während der Produktion immer ein Sägeschlitten 2, 3 arbeiten kann. Bei kurzen Längen der Platten 7 verfahren die Sägeschlitten 2, 3 kurz hintereinander und können so zum Beispiel auch eine sehr kurze Laborschnittplatte 18 problemlos herstellen. Haben beide Sägeschlitten 2, 3 die Endseite 21 erreicht, so verfahren beide zusammen wieder in Richtung Startseite 20.

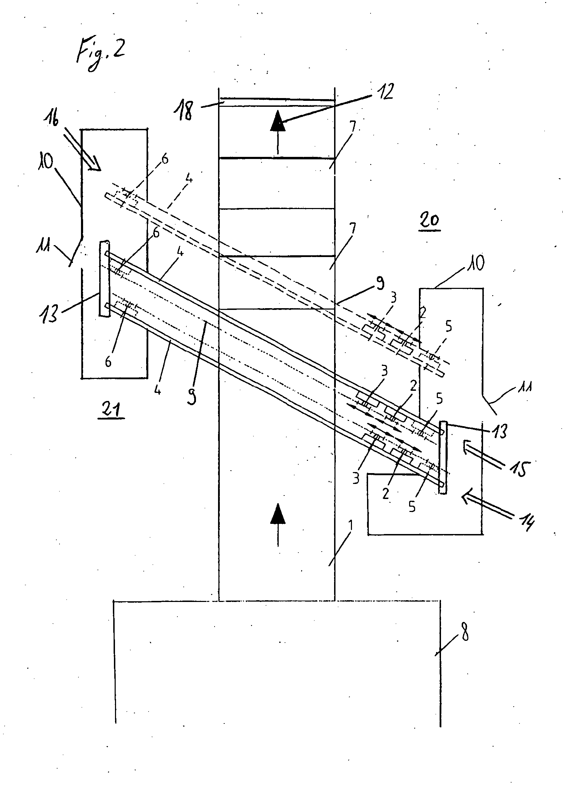

Figur 2 zeigt in einem bevorzugten Ausführungsbeispiel mehrere Diagonalsägen 14, 15, 16 in einseitiger Bauweise, die nebeneinander angeordnet sind. Dabei sind die Diagonalsägen 14, 15 in einer bevorzugten Ausführungsform auf einem Gestell 13 je Seite gelagert und die Laufschienen 4 weisen zumindest zwei hintereinander angeordnete Sägeschlitten 2, 3 auf. Dementsprechend kommen hier auf kürzestem Bauraum in Vorschubrichtung 12 Trennaggregate 17 auf den zugehörigen Sägeschlitten 2, 3 zum Einsatz. Derartige Anordnungen sind zum Beispiel für Hochgeschwindigkeitsproduktionen von Dünnplatten mit einer : Vorschubgeschwindigkeit von über 1200 mm/s notwendig, wobei die Notwendigkeit natürlich auch von der Aufteillänge des Plattenstranges 1 abhängig ist.

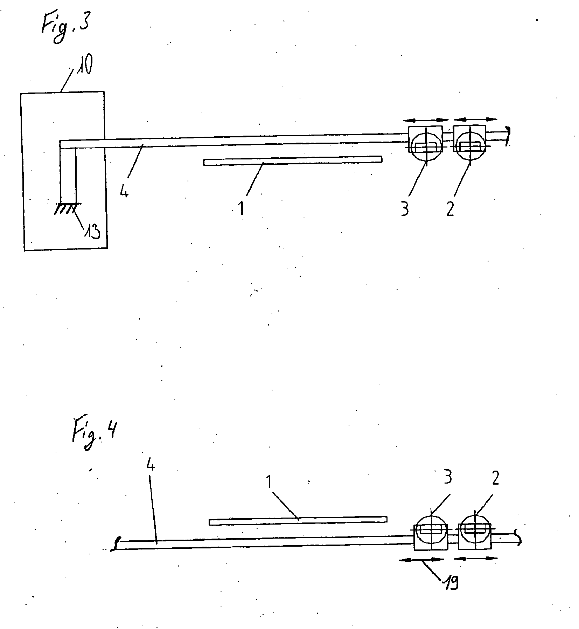

In einer weiteren bevorzugten Ausführungsform zeigen die Figuren 3 und 4 zwei Varianten der Anordnung der Laufschienen 4, wobei diese gegenüber dem Plattenstrang 1 oben und/oder unten liegend angeordnet sind.

Bei mehreren Laufschienen 4 in Reihe kann auch eine alternierende Anordnung gegenüber dem Plattenstrang 1 von Vorteil sein.
Alle Sägeschlitten 2, 3 können einzeln, nacheinander oder im Wechseltakt in Kombination mit weiteren Diagonalsägen arbeiten.

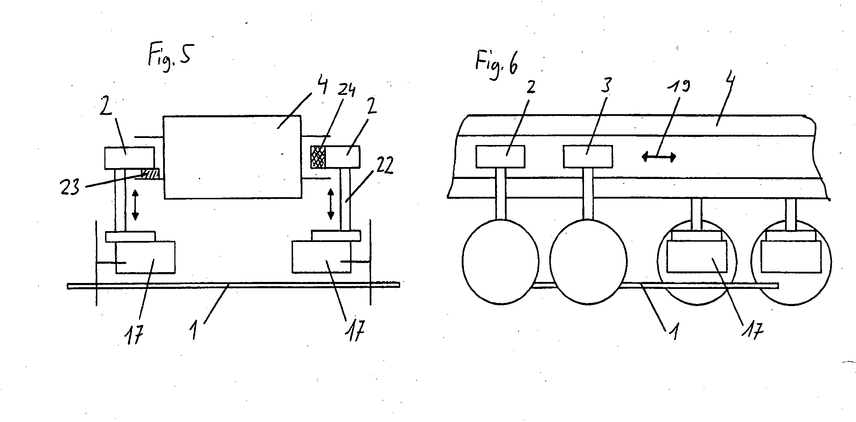

In den Figuren 5 und 6 ist eine mögliche erweiterte Ausführung einer Laufschiene 4 in zweiseitiger Bauweise mit vier Trennaggregaten 17 an vier Sägeschlitten 2, 3 dargestellt. Hierbei sind auf jeder Seite der Laufschiene 4 zumindest zwei Sägeschlitten 2, 3 angeordnet. Dabei wird jeder Sägeschlitten 2, 3 separat entweder mit einem von außen wirkendem Verfahrantrieb 23 in Verfahrrichtung 19 verfahren. Zur Anwendung können hierbei geeignete Linearförderer, beispielsweise Zahnriemen-, Zahnstangenantrieb oder elektromagnetischen Linearantrieb oder dergleichen, kommen. Bei einer vereinfachten und bevorzugten Ausführungsform sind die Verfahrantriebe 24 auf den Sägeschlitten 2, 3 selbst montiert. Je nach Auslegung der Konstruktion können die Trennaggregate 17 an den Sägeschlitten 2, 3 auf einer gemeinsamen oder auf einer versetzten Trennlinie 19 schneiden. Dem Fachmann ist je nach Bauform der Diagonalsägevorrichtungen 14, 15, 16 die genaue Art und Weise des Aufbaues der Laufschiene 4, der entsprechenden Führungsbereiche für die Sägeschlitten 2, 3 und deren genaue Anordnung überlassen. Entscheidend nach der Lehre der Erfindung ist, dass auf einer Seite einer Laufschiene 4 zumindest zwei Sägeschlitten 2, 3 zur Anwendung kommen, die mit einem zeitlichen Abstand nacheinander einen Trennschnitt durchführen können, aber gleichzeitig bzw. zusammen wieder in Startposition auf die Startseite 20 zurück fahren. Dabei ist dem Fachmann bekannt, dass die an den Sägeschlitten 2, 3 angeordneten Trennaggregate 17 mittels einer Höhenverstellung 22 heb- und senkbar ausgeführt sein müssen, damit die in den Plattenstrang 1 eingreifenden Trennmittel (Sägeblätter) bei der Rückfahrt zur Startseite 20 nicht in Eingriff mit dem Plattenstrang 1 geraten.
Die notwendige Anlagensteuerung und -regelungsproblematik ist dem Fachmann bekannt und dieser wird für den Aufbau entsprechend notwendigen Kenntnisse verwenden, auch wenn sie nicht explizit in vorliegender Ausarbeitung hervorgehoben worden sind.

### Bezugszeichenliste:

- 1.: Plattenstrang
- 2.: Sägeschlitten 1
- 3.: Sägeschlitten 2
- 4.: Laufschiene
- 5.: Werkzeugwechselposition für Sägeschlitten 1
- 6.: Werkzeugwechselposition für Sägeschlitten 2
- 7.: Platte
- 8.: Produktionsanlage
- 9.: Trennlinie
- 10.: Sicherheitszaun
- 11.: Tür
- 12.: Vorschubrichtung
- 13.: Gestell
- 14.: Diagonalsägevorrichtung
- 15.: Diagonalsägevorrichtung
- 16.: Diagonalsägevorrichtung
- 17.: Trennaggregat
- 18.: Laborschnittplatte
- 19.: Verfahrrichtung
- 20.: Startseite
- 21.: Endseite
- 22.: Höhenverstellung
- 23.: Verfahrantrieb (außen)
- 24.: Verfahrantrieb an 2/3

## Patentansprüche

1. Vorrichtung zum Trennen und Aufteilen eines sich fortbewegenden plattenförmigen Produktes, das als Plattenstrang (1) aus einer Produktionsanlage (8) austritt,
wobei zumindest eine Diagonalsägevorrichtung (14, 15, 16) in Vorschubrichtung (12) und quer über den Plattenstrang (1) angeordnet ist, wobei die Diagonalsägevorrichtung (14, 15, 16) aus beidseits des Plattenstranges (1) angeordneten Gestellen (13) und einer diese Gestelle (13) verbindende Laufschiene (4) besteht,
wobei auf der Laufschiene (4) verfahrbare Sägeschlitten (2, 3) mit darauf montierten höhenverstellbaren Trennaggregaten (17) angeordnet sind, **dadurch gekennzeichnet,**
**dass** zumindest zwei Sägeschlitten (2, 3) auf einer Seite einer eine Startseite (20) und eine Endseite (21) aufweisenden Laufschiene (4) der Diagonalsägevorrichtung (14, 15, 16) angeordnet sind und dass die Sägeschlitten (2, 3) von einander unabhängig arbeitende Verfahrantrieb aufweisen.

2. Vorrichtung nach Anspruch 1, **dadurch gekennzeichnet, dass** als Antrieb für die Sägeschlitten (2, 3) ein von außen wirkender Verfahrantrieb (23) angeordnet ist.

3. Vorrichtung nach Anspruch 1, **dadurch gekennzeichnet, dass** der Verfahrantrieb (24) für die Sägeschlitten (2, 3) auf dem Sägeschlitten (2, 3) selbst angeordnet ist.

4. Vorrichtung nach Anspruch 1, **dadurch gekennzeichnet, dass** bei einer beidseitigen Anordnung von Sägeschlitten (2, 3) auf einer Laufschiene (4) zumindest zwei Sägeschlitten (2, 3) je Seite angeordnet sind.

5. Vorrichtung nach Anspruch 1, **dadurch gekennzeichnet, dass** die Trennaggregate (17) der Sägeschlitten (2, 3) einer Seite der Diagonalsägevorrichtung (14, 15, 16) auf einer Trennlinie (9) arbeiten.

6. Vorrichtung nach Anspruch 1, **dadurch gekennzeichnet, dass** die Trennaggregate (17) der Sägeschlitten (2, 3) einer Seite der Diagonalsägevorrichtung (14, 15, 16) auf unterschiedlichen Trennlinien (9) arbeiten.

7. Vorrichtung nach Anspruch 1, **dadurch gekennzeichnet, dass** zumindest eine Laufschiene (4) mit zugehörigen Sägeschlitten (2, 3) oberhalb des Plattenstranges (1) angeordnet ist.

8. Vorrichtung nach Anspruch 1, **dadurch gekennzeichnet, dass** zumindest eine Laufschiene (4) mit zugehörigem Sägeschlitten (2, 3) unterhalb des Plattenstranges (1) angeordnet ist.

9. Vorrichtung nach Anspruch 1, **dadurch gekennzeichnet, dass** bei Anordnung mehrere Diagonalsägevorrichtungen (14, 15, 16) nebeneinander oder mehrerer Laufschienen (4) auf einem Gestell (13) die Laufschienen (4) alternierend ober- und unterhalb des Plattenstranges (1) angeordnet sind.

10. Verfahren zum Trennen und Aufteilen eines sich fortbewegenden plattenförmigen Produktes, das als Plattenstrang (1) aus einer Produktionsanlage (8) austritt, wobei zumindest eine Diagonalsägevorrichtung (14, 15, 16) in Vorschubrichtung (12) und quer über den Plattenstrang (1) angeordnet ist, wobei die Diagonalsägevorrichtung (14, 15, 16) aus beidseits des Plattenstranges (1) angeordneten Gestellen (13) und einer diese Gestelle (13) verbindende Laufschiene (4) besteht,
wobei auf der Laufschiene (4) verfahrbare Sägeschlitten (2, 3) mit darauf montierten höhenverstellbaren Trennaggregaten (17) angeordnet sind, **dadurch gekennzeichnet,**
**dass** auf einer Seite einer Laufschiene (4) zumindest zwei Sägeschlitten (2, 3) im regulären Betrieb zeitlich beabstandet von der Startseite (20) in Richtung Endseite (21) und zusammen von der Endseite (21) in Richtung Startseite (20) verfahren werden.

## Claims

1. An apparatus for separating and segmenting a moving panel-shaped product, which moves out of a production installation (8) as a panel-shaped strand (1), wherein at least one diagonal sawing apparatus (14, 15, 16) is arranged in the forward feed direction (12) and transversely above the panel-shaped strand (1), wherein the diagonal sawing apparatus (14, 15, 16) consists of frames (13) arranged on both sides of the panel-shaped strand (1) and a running rail (4) connecting said frames (13), wherein displaceable saw carriages (2, 3) with height-adjustable separating units (17) mounted thereon are arranged on the running rails (4), **characterized in that** at least two saw carriages (2, 3) are arranged on a side of a running rail (4) of the diagonal sawing apparatus (14, 15, 16), said running rail having a starting side (20) and an end side (21), and the saw carriages (2, 3) have traversing drives operating independently from each other.

2. An apparatus according to claim 1, **characterized in that** an externally acting traversing drive (23) is arranged as a drive for the saw carriages (2, 3).

3. An apparatus according to claim 1, **characterized in that** the traversing drive (24) for the saw carriages (2, 3) is arranged on the saw carriage (2, 3) itself.

4. An apparatus according to claim 1, **characterized in that** at least two saw carriages (2, 3) are arranged on one side each in the case of a arrangement of the saw carriages (2, 3) on both sides on a running rail (4).

5. An apparatus according to claim 1, **characterized in that** the separating units (17) of the saw carriages (2, 3) of one side of the diagonal sawing apparatus (14, 15, 16) operate on one separating line (9).

6. An apparatus according to claim 1, **characterized in that** the separating units (17) of the saw carriages (2, 3) of one side of the diagonal sawing apparatus (14, 15, 16) operate on different separating lines (9).

7. An apparatus according to claim 1, **characterized in that** at least one running rail (4) with associated saw carriages (2, 3) is arranged above the panel-shaped strand (1).

8. An apparatus according to claim 1, **characterized in that** at least one running rail (4) with associated saw carriages (2, 3) is arranged beneath the panel-shaped strand (1).

9. An apparatus according to claim 1, **characterized in that** the running rails (4) are arranged in an alternating fashion above and beneath the panel-shaped strand (1) in the case of an arrangement of several diagonal sawing apparatuses (14, 15, 16) next to one another or several running rails (4) on a frame (13).

10. A method for separating and segmenting a moving panel-shaped product,
which moves out of a production installation (8) as a panel-shaped strand (1), wherein at least one diagonal sawing apparatus (14, 15, 16) is arranged in the forward feed direction (12) and transversely above the panel-shaped strand (1), wherein the diagonal sawing apparatus (14, 15, 16) consists of frames (13) arranged on both sides of the panel-shaped strand (1) and a running rail (4) connecting said frames (13), wherein displaceable saw carriages (2, 3) with height-adjustable separating units (17) mounted thereon are arranged on the running rails (4), **characterized in that** at least two saw carriages (2, 3) are displaced on one side of the running rail (4) in regular operation in a time interval from the starting side (20) in the direction towards the end side (21) and together from the end side (21) in the direction towards the starting side (20).

## Revendications

1. Dispositif pour découper et répartir un produit en forme de panneau en mouvement sortant d'une installation de production (8) sous la forme d'un panneau extrudé (1),
dans lequel au moins un dispositif de sciage diagonal (14, 15, 16) est disposé dans le sens d'avancement (12) et transversalement au-dessus du panneau extrudé (1), le dispositif de sciage diagonal (14, 15, 16) se composant de bâtis (13) disposés de part et d'autre du panneau extrudé (1) et d'un rail de roulement (4) reliant ces bâtis (13),
dans lequel sont disposés sur le rail de roulement (4) des chariots de sciage (2, 3) mobiles avec des groupes de découpe (17) réglables en hauteur montés dessus,
**caractérisé en ce qu'**au moins deux chariots de sciage (2, 3) sont disposés d'un côté d'un rail de roulement (4) du dispositif de sciage diagonal (14, 16, 16) présentant un côté de début (20) et un côté de fin (21) et **en ce que** les chariots de sciage (2, 3) présentent des entraînements de propulsion fonctionnant indépendamment l'un de l'autre.

2. Dispositif selon la revendication 1, **caractérisé en ce que** l'entraînement des chariots de sciage (2, 3) est un entraînement de propulsion (23) agissant de l'extérieur.

3. Dispositif selon la revendication 1, **caractérisé en ce que** l'entraînement de propulsion (24) des chariots de sciage (2, 3) est disposé sur les chariots de sciage (2, 3) eux-mêmes.

4. Dispositif selon la revendication 1, **caractérisé en ce que** lorsque les chariots de sciage (2, 3) sont disposés de part et d'autre sur un rail de roulement (4), au moins deux chariots de sciage (2, 3) sont disposés de chaque côté.

5. Dispositif selon la revendication 1, **caractérisé en ce que** les groupes de découpe (17) des chariots de sciage (2, 3) d'un côté du dispositif de sciage diagonal (14, 15, 16) fonctionnent sur une ligne de découpe (9).

6. Dispositif selon la revendication 1, **caractérisé en ce que** les groupes de découpe (17) des chariots de sciage (2, 3) d'un côté du dispositif de sciage diagonal (14, 15, 16) fonctionnent sur des lignes de découpe (9) différentes.

7. Dispositif selon la revendication 1, **caractérisé en ce qu'**au moins un rail de roulement (4) avec les chariots de sciage (2, 3) associés est disposé au-dessus du panneau extrudé (1).

8. Dispositif selon la revendication 1, **caractérisé en ce qu'**au moins un rail de roulement (4) avec les chariots de sciage (2, 3) associés est disposé en dessous du panneau extrudé (1).

9. Dispositif selon la revendication 1, **caractérisé en ce que** lorsque plusieurs dispositifs de sciage diagonal (14, 15, 16) sont disposés les uns à côté des autres ou plusieurs rails de roulement (4) sur un bâti (13), les rails de roulement (4) sont disposés alternativement au-dessus et en dessous du panneau extrudé (1).

10. Procédé pour découper et répartir un produit en forme de panneau en mouvement sortant d'une installation de production (8) sous la forme d'un panneau extrudé (1), dans lequel au moins un dispositif de sciage diagonal (14, 15, 16) est disposé dans le sens d'avancement (12) et transversalement au-dessus du panneau extrudé (1), le dispositif de sciage diagonal (14, 15, 16) se composant de bâtis (13) disposés de part et d'autre du panneau extrudé (1) et d'un rail de roulement (4) reliant ces bâtis (13),
dans lequel des chariots de sciage (2, 3) déplaçables sont disposés sur le rail de roulement avec des groupes de découpe (17) réglables en hauteur montés dessus,
**caractérisé en ce que** sur un côté d'un rail de roulement (4), au moins deux chariots de sciage (2, 3) sont déplacés en fonctionnement normal à distance dans le temps du côté de début (20) vers le côté de fin (21) et ensemble du côté de fin (21) vers le côté de début (20).
